# EUROPEAN PATENT SPECIFICATION

(11) **EP 1 266 458 B1**
(45) Date of publication and mention of the grant of the patent: **24.05.2006**
(21) Application number: 01909318.6
(22) Date of filing: 28.02.2001
(51) Int. Cl.: G06K 7/00, G06K 19/07

(54) **RADIO FREQUENCY IDENTIFICATION TRANSPONDER**
HOCHFREQUENZ-IDENTIFIKATIONSTRANSPONDER
TRANSPONDEUR D'IDENTIFICATION PAR RADIOFREQUENCE

(30) Priority: 28.02.2000 AU PQ589400
(43) Date of publication of application: 18.12.2002
(60) Divisional application: 05075638.6
(73) Proprietor: MAGELLAN TECHNOLOGY PTY. LIMITED, Annandale, NSW 2038 (AU)
(72) Inventor: LITTLECHILD, Stuart, Colin, Stanmore, NSW 2048 (AU); STANTON, Michael, John, Cherrybrook, NSW 2126 (AU)
(74) Representative: Frost, Alex John
(86) International application number: PCT/AU2001/000203
(87) International publication number: WO 2001/065712

(56) References cited:
- EP-A- 0 590 590
- US-A- 4 121 102
- US-A- 4 303 904
- US-A- 4 783 798
- US-A- 5 157 634
- US-A- 5 392 251
- US-A- 5 590 082

## Description

### FIELD OF INVENTION

The present invention relates to a radio frequency identification ("RFID") transponder, and more particularly to an RFID transponder that are used in orientation independent applications. That is, where a transponder must be operatable in random orientations.

The invention has been developed primarily for interrogating multiple passive transponders that are attached to objects to be identified by those respective transponders, and will be described hereinafter with reference to that application. A typical application is the identification of RFID transponders attached to conveyor fed-luggage where the transponder data is used to control the automatic sorting of the luggage. However, the invention is not limited to this particular field of use. For example, various aspects of the invention are applicable to systems based on active transponders, and to applications other than luggage sorting systems.

### BACKGROUND

In prior art systems, transponders are read by interrogation fields within Tunnel Reader Programmers ("TRPs"). Typically, the orientation and position of transponders as they enter the TRP are random and unknown. Accordingly, the TRP must switch its interrogation fields between orthogonal directions so that the transponders can be interrogated independently of their orientation. Patent US 5,258,766 provides an example of such a system.

There are a number of specific issues arising from the practical use of RFID transponders, in, say, luggage handling situations. These issues include the facts that, for example:
1. A mechanical means, such as a conveyor, moves luggage (and thereby transponders) through the TRP.
2. Several transponders may be attached to a single item.

Where a mechanical means, such as a conveyor, moves items with attached transponders through the TRP the determination of the order of items on the conveyor is an essential requirement for allowing automated processing of the items. The determination of the order in which transponders enter a TRP is advantageous for determining the order of items on the conveyor. In prior art systems transponder order is normally inferred from the order in which they are identified. However, where multiple transponders are present the identification messages from these transponders may clash and the transponders may fail to be identified as they enter the TRP. When messages clash a further time interval will be required to correctly identify the transponders. During this time the transponders are moved further into the TRP by the conveyor. It is possible that subsequent transponder or transponders may enter the TRP before the first transponder is identified. It then becomes possible that one or more of the subsequent transponders may be identified before the first transponder. Consequently, the order of items may incorrectly be inferred from the order of transponder identification.

When the interrogation fields are switched, passive transponders power down within a relatively short time, at which point temporary data stored in volatile memory on board the transponder may be lost. Such data can include configuration information or temporary data stored in registers. In prior art systems configuration information or temporary settings required for transponder operation must be regenerated in the transponder after each switching of the interrogation field. This data can be read out of the transponder's memory or may have to be transmitted to the transponder by the TRP. This is undesirable because of the time delay involved. Moreover, in some cases, the data may no longer be available.

EP-A-0 590 590 is acknowledged in the preamble of claims 1 and 14.

The above discussion is not to be taken as an admission of the extent of the common general knowledge in the field of the invention.

### SUMMARY OF THE INVENTION

It is an object of the present invention to overcome, or at least substantially ameliorate, one or more of the disadvantages of the prior art or at least to provide a useful alternative.

The invention is set out in claims 1 and 14.

### BRIEF DESCRIPTION OF THE DRAWINGS

Preferred embodiments of the invention will now be described, by way of example only, with reference to the accompanying drawings, in which:
Figure 1 shows a prior art TRP;
Figure 2 shows waveforms associated with the prior art TRP of Figure 1;
Figures 3(a) and 3(b) show exemplary circuit schematics associated with a transponder memory array according to the present invention;
Figures 4(a) and 4(b) show waveforms associated with the exemplary circuit schematics shown in Figures 3(a) and 3(b);
Figure 5 shows an example circuit for use with a transponder memory array according to the invention;
Figure 6 shows an example circuit for use with a transponder memory array according to the invention;
Figure 7 is a perspective view of a piece of luggage having attached to it a transponder according to the invention;
Figure 8 is a block diagram of relevant functional portions of the transponder according to the invention;
Figure 9 shows a diagram of a conveyor mounted interrogator according to the invention with closely spaced items with transponders attached to the items;
Figure 10 shows waveforms received by a transponder according to an embodiment of the invention;
Figure 11 shows an embodiment of the invention having a memory array using RAM;
Figure 12 shows a diagram of a baggage handling system according to the invention including two closely spaced conveyor mounted interrogators;
Figure 13 shows a block diagram of relevant functional portions of a transponder according to another embodiment of the invention; and
Figure 14 shows an example circuit of a memory power supply isolator for use with a transponder according to the invention.

### DETAILED DESCRIPTION

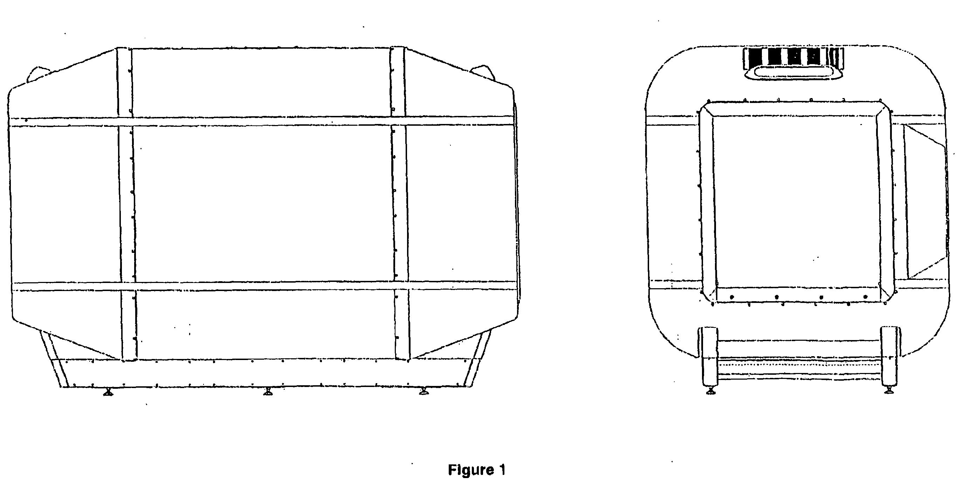

Figure 1 shows a TRP for a prior art transponder system as disclosed by US 5,258,766.

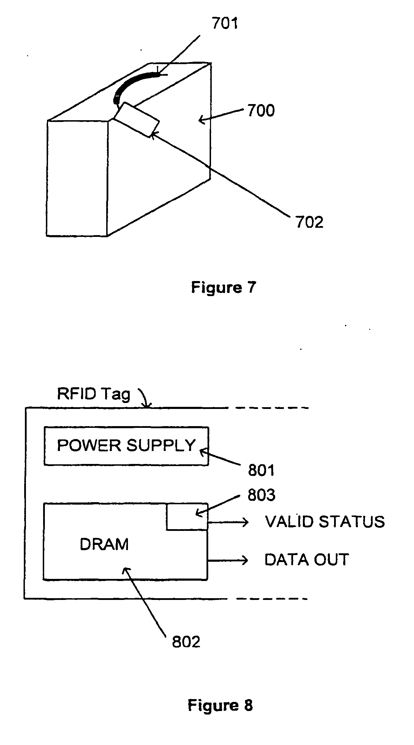

Referring now to Figure 7, there is illustrated a piece of luggage 700 which includes a handle 701 that supports a radio frequency identification ("RFID") transponder 702. In this case, transponder 702 is a passive transponder intended to be powered by an interrogation signal as discussed below. However, it will be appreciated that the transponder could be active (battery powered) or a hybrid active/passive transponder. It will also be understood that the use of RFID transponders on luggage is only one example of a wide range of uses to which the technology can be applied.

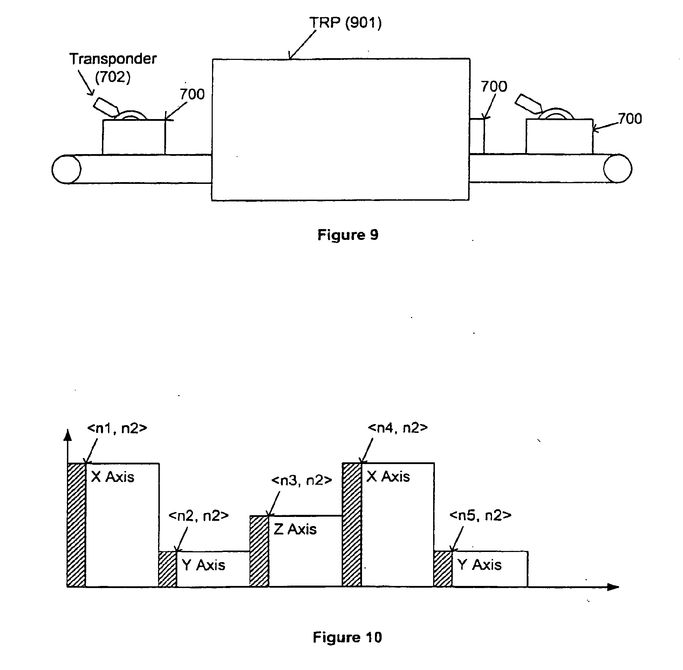

Figure 9 shows a diagram of a conveyor mounted TRP 901 with a series of closely spaced luggage items 700 on the conveyor such as would be encountered on a baggage handling system in an airport, a train station or other transport interchange. Each item has one or more RFID transponder 702 attached. Each transponder includes a unique character string that is transmits, upon interrogation, to allow identification of the specific transponder.

To allow automated sorting and to facilitate other physical handling processes involving the items it is necessary to carefully and accurately determine the order of the items on the conveyor. This, in turn is greatly facilitated if an accurate determination of the order in which the transponders enter a TRP can be made.

It has been known to infer the item order on the conveyor from the order in which the respective transponders are identified by an interrogator. However, with the increasing volumes of items to be handled and the short time in which to affect that handling, there is constant pressure to increase conveyor speeds and to reduce the spacing between the items. Moreover, the number of possible combinations of arrivals and departures from major terminals is escalating which in turn introduces more complexity and more need for increased processing of the items. The result of which is to use multiple transponders. However, with prior art devices this only exponentially increases the risk that the identification messages from these transponders will clash and the transponders will fail to be identified as they enter the TRP. This failing of the prior art only compounds the problem, because when messages clash a further time interval is required to correctly identify the transponders. During this further interval the transponders are moved further into the TRP by the conveyor. This then gives rise to the risk of subsequent transponders entering the TRP before the first transponders are identified. It then becomes possible that one or more of the subsequent transponders will be identified before the first transponder. Consequently, with rising conveyor speeds and decreasing distances between items, the order of the items cannot be reliably inferred from the order of transponder identification.

As discussed earlier, in the TRP of the present preferred embodiment, the interrogation field is sequentially and periodically switched between orthogonal orientations to ensure that all transponders are powered regardless of their relative orientations. In one preferred embodiment of the present invention, when the interrogation field is first transmitted in an orthogonal orientation, a unique number is transmitted by the TRP as part of the interrogating signal. This number is representative of the time of the transmission and the particular orthogonal orientation. This number, defined as a time stamp number, is received by all transponders that are being powered by the interrogation field. Those tags that are being powered for the first time store the time stamp number in a memory. Those tags that already have a time stamp number stored in memory from an earlier interrogation ignore the new time stamp number.

It will be appreciated that the direction of the interrogating field is switched about every 10 ms although in other embodiments different periods are used. Moreover, while the preferred embodiment generates a new time stamp at each switching, it is known in other embodiments to use the same time stamp for respective direction for a plurality of cycles, and in some cases up to ten cycles. This, however, is dependent upon the speed of the conveyor, the density of the items on the conveyor and the length of the TRP.

Returning to the preferred embodiment, each transponder has an on-board memory array for storing first data and a signal processor for extracting the time stamp from the interrogating signal. The contents of the memory array - the first data - is compared with the extracted time stamp and, under certain conditions, the time stamp is stored in the memory array. More preferably, if the time stamp is stored, it overwrites some or all of the first data to constitute fresh first data.

That is, the transponders are configured to access the respective time stamps and to selectively store the information in their memory arrays. The decision as to whether the first data is over written is dependent upon whether or not that transponder has previously been interrogated by the interrogator. If not, then the first data is overwritten. Conversely, if so, then no overwrite occurs. In effect, the first data is representative of the earliest instant the transponder entered the TRP and was powered - that is, interrogated -for the first time by that interrogator.

The time stamp number is then included as part of each transponders reply or response message. When the transponders provide this message it is received by the interrogator to allow the transponders, and the corresponding items, to be identified and the order of entrance into the TRP to be determined from the time stamp number. The determination of transponder order is now independent of the rate of identification. The operation of the preferred embodiment allows a transponder to traverse the full length of the TRP before it need be identified and the presence of many transponders inside the TRP is not problematic, as all are identified without loss of transponder order.

Advantageously, the preferred embodiment allows the velocity with which transponders move through the TRP to be much higher than the prior art systems where transponders must be identified before the next transponder enters the TRP.

The apparatus and method of the preferred embodiment is not limited to TRP operation but rather is applicable to any single or multiple axis transponder reader. That is, all these devices are suitable for periodically transmitting a unique time stamp number so that transponders newly entered into the interrogation field receives and stores the time stamp. Subsequently the time stamp is included in the transponder's reply message and the reader is able to infer the earliest instant that the transponder entered the interrogation field.

It will be appreciated that the response or reply signal that is provided by the transponder includes information in addition to any data that is derived from the identifier. This information is usually a unique code or string that allows the transponder itself to be identified. That is, the response signal, once decoded by the interrogator, obtains not only data indicative of the particular transponder, but also feedback as to the timing or order in which that transponder was first interrogated.

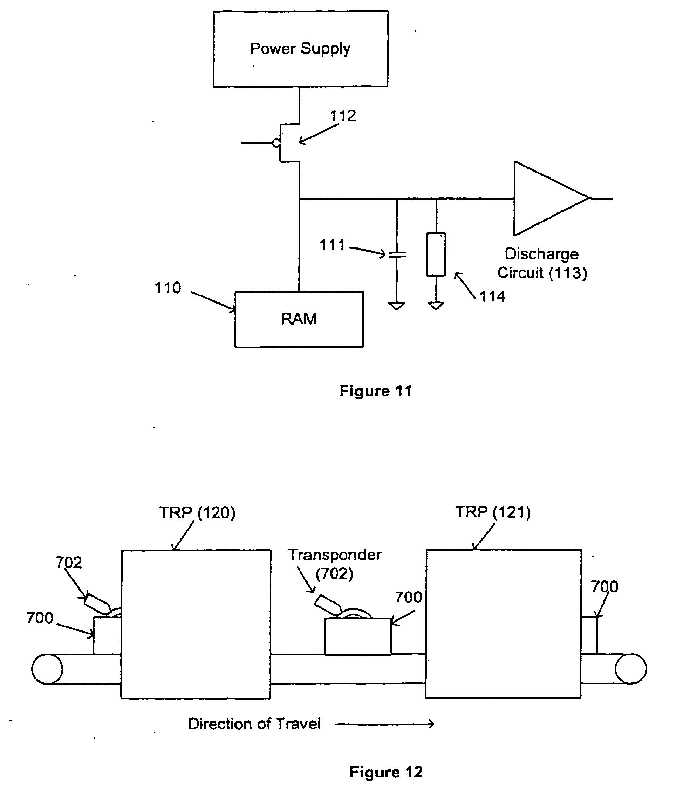

Preferably, the interrogating signal includes an identifier that includes, in addition to the time stamp referred to above, a unique character string or other unique code for allowing identification of the interrogator. This becomes particularly significant in systems where use is made of a plurality of interrogators. For example, in Figure 12 there is illustrated a system where two TRP's - TRP 120 and TRP 121 - are closely spaced on a conveyor. The items and the corresponding transponders exit TRP 120 and enter the next TRP 121 in quick succession. Using conventional systems with high conveyor speeds it is increasingly common for the time interval between exit and entrance to be too short for the transponder circuits to detect that the TRP has changed. Under these conditions there is an increasing risk that the transponder will ignore the time stamp number transmitted by the second TRP. However, the application of the invention to this system overcomes those limitations of the prior art as the transponder will respond to the interrogation signal from the second interrogator as it will provide an identifier that is different to that of the first interrogator. More particularly, when the interrogation field is first actuated in a fresh orthogonal direction a unique number representative of the TRP is transmitted by the TRP. This number, called the TRP identification number (TRP ID), is received by all transponders that are being powered by the interrogation field. Those tags that are being powered for the first time store the TRP ID in memory. Those tags that already have a TRP ID stored in memory from an earlier interrogation compare this stored TRP ID against the transmitted TRP ID to determine whether the transponder has entered a new TRP. If the TRP ID's are different the transponder stores the new number to memory and proceeds to operate as though they were being powered for the first time. In this manner the close spacing of TRP does not impair transponder operation.

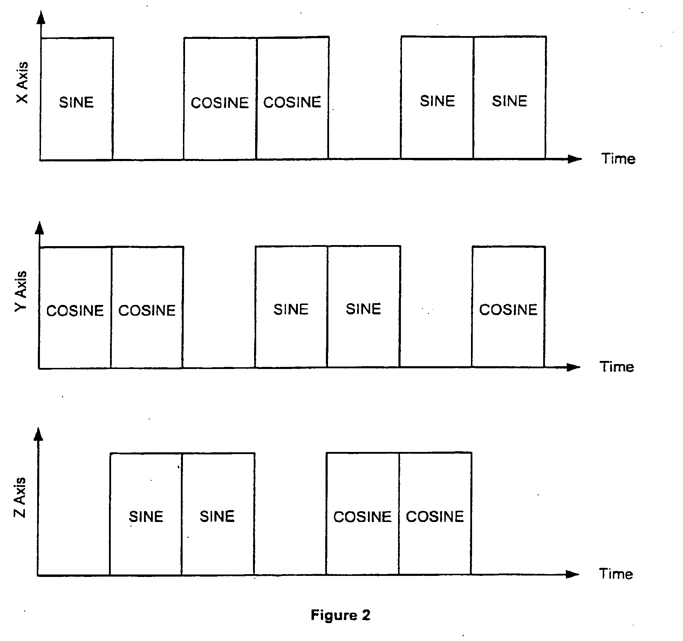

Figure 2 shows the interrogation waveforms associated with the prior art TRP shown in Figure 1. The TRP uses three orthogonal axes along the X, Y and Z directions. It excites these with sine or cosine currents as described in US 5,258,766.

In contrast, Figure 10 shows the interrogation waveform received by a transponder according to a preferred embodiment of the invention where the time stamp number and TRP ID <number 1, number2> are transmitted at the beginning of each orthogonal field. A transponder oriented along one of the orthogonal axes will periodically experience a power outage when the excitation is removed from that axis. Passive transponders power down within a relatively short time, at which point data stored in volatile memory on board the transponder will be lost if the power down time is sufficiently long. Such data can include the time stamp number, TRP identification number, configuration information or temporary data stored in registers.

If the configuration information or temporary settings required for transponder operation are lost then they must be regenerated in the transponder after each switching of the interrogation field. This data can be read out of the transponder's memory or may have to be transmitted to the transponder by the TRP. This is undesirable because of the time delay involved. Moreover, information such as the time stamp will be no longer available.

To prevent the loss of the transponder's time stamp number, TRP ID, configuration information or other temporary data, the data must be stored in either conventional non-volatile memory, such a Electrically Erasable Programmable Random Access Memory EEPROM, or in a memory array that is able to hold its information for a period longer than the longest periodic power outage. This memory array will be referred to as "temporary memory". While suitable for use with some embodiments of the invention, EEPROM has the disadvantage that writing data into memory takes several milliseconds. A Random Access Memory RAM or a Dynamic Random Access Memory DRAM like memory does not suffer from slow write times and consumes little power. It will be appreciated that RAM will hold its data provided the supply voltage is maintained and DRAM will hold its data for a short time after the supply voltage has been removed.

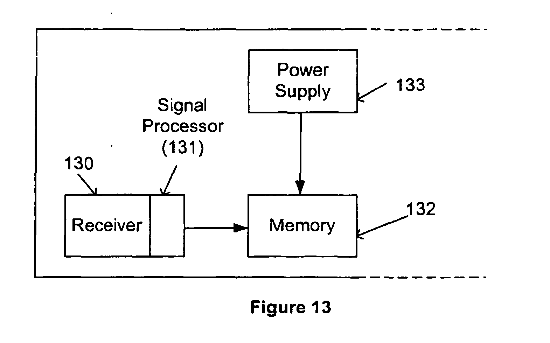

Figure 13 shows a simplified block diagram of specific portions of the RFID transponder's circuits pertinent to the invention. It will be understood by those skilled in the art that RFID tags include a number of functional blocks other than those illustrated. However, these have been omitted from the present description for the purposes of clarity, on the basis that those skilled in the field will be aware of the blocks required, and how to implement them in an RFID tag. The receiver 130 receives the interrogator's interrogating signal which, in this embodiment, includes an identifier in the form of the time stamp number and the TRP ID. In other embodiments only one or the other of the time stamp and TRP ID are sent. Moreover, in still further embodiment additional information is included instead of or in addition to the above information.

The transponder includes a signal processor 131 that is responsive to the receiver 130 for extracting the identifier which is supplied in whole or in part to the on-board memory 132 for storage. The decision as to what information to store, if any, is usually based upon a comparison of the identifier with the existing contents of the memory. For example, in some instances it will simply be a decision of whether the identifier is different from the stored information, as this will be the case upon the first interrogation of the transponder as it is usual for the memory 132 to contain all zeros or all ones at the time of power up. However, if EEPROM type memory is used then the comparison will be more rigorous, as a power down condition will not corrupt the data in the memory. Accordingly, the decision, in some embodiments, is based upon whether the stored date stamp has, in effect, timed out. In other embodiments, however, the decision is based upon a comparison of the received and the stored TRP ID. That is, if the TRP ID is different then the transponder overwrites the stored data with the freshly received data in recognition that the transponder is now being interrogated by another TRP. In further embodiments alternative decision making processes are involved. However, the end result of this is that the memory 132 will contain at least one identifier or at least a sufficient portion of that identifier to allow the transponder to communicate timing details to a TRP when interrogated.

The transponder also includes an on-board power supply 133 for providing electrical power to the transponder. It will be appreciated that the power supply also supplies power to the memory 132.

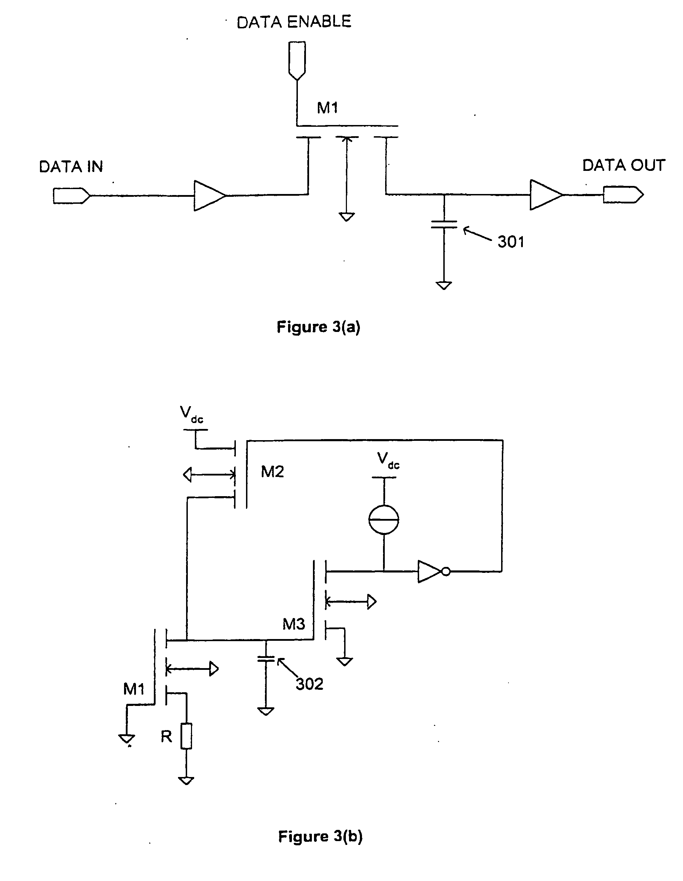

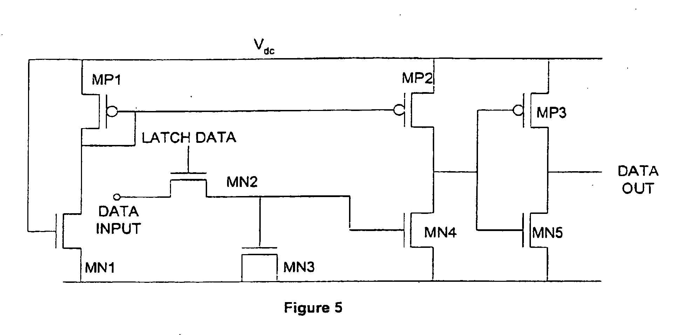

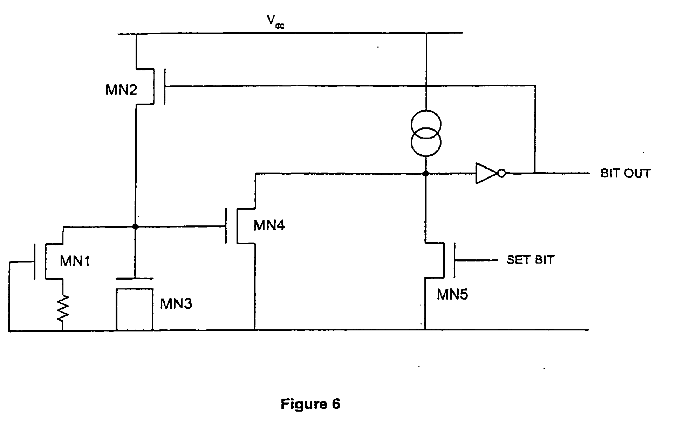

Turning to Figure 8, there is shown a simplified block diagram of specific portions of an embodiment of the invention that makes use of temporary memory. In particular, an RFID tag 800 is illustrated and includes a substrate for supporting all the electronic components, some of which are shown and others of which are omitted for the sake of clarity. The components of interest are a power supply 801 and a temporary memory array in the form of dynamic random access memory (DRAM) 802. The DRAM 802 includes a plurality of address cells (described in detail in relation to Figures 3(a) and 5) for holding temporary data used by the RFID transponder and its interrogator. In the preferred embodiment, the DRAM also includes timing means in the form of a modified memory cell 803 and associated circuitry (discussed in detail in relation to Figures 3(b) and 6). Alternative embodiments of the circuit shown in Figure 8 will be discussed later.

Figure 3(a) shows a schematic of a preferred circuit used for storing one bit of temporary data. It will be appreciated that the memory on-board the transponder is comprised or many like circuits to provide the storage capacity required for the application concerned. Referring back to Figure 3(a), the memory circuit is a temporary memory circuit where data is input at Data In, input data is stored on the storage capacitor by Data Enable and the stored data is available at Data Out. Data is stored on a storage capacitor 301, and once so stored, there is no discharge path other than leakage currents through M1 and the output inverter's gate capacitances. These leakage currents are relatively small and the storage capacitor voltage will maintain itself for at least a few seconds. The normal refresh circuits used for maintaining the data once stored are not shown but are well known and understood to those in the relevant field.

The data that is stored in the temporary memory will typically be derived from one of two sources. Firstly it can be derived from the TRP which transmits the data to the transponder. Secondly it can be derived internally; either from the transponder's own memory or generated from circuits on the transponder.

Figure 3(b) shows a schematic of a preferred the circuit used for storing the Valid DRAM Bit. The chip voltage Vdc is maintained on a storage capacitor 302 by the refresh circuit formed by M2, M3, a current source and an inverter. When the voltage Vdc decreases due to a power outage the refresh circuit prevents the storage capacitor from discharging through M2. Discharge occurs through the current sink formed by M1 and R. This circuit, when M1 is correctly sized, provides a reliable and stable discharge current. The details of this circuit's operation are provided in the publication "Switched-Source-Impedance CMOS Circuit For Low Standby Subthreshold Current Giga-Scale LSI's" pages 1131-1135 of the IEEE JOURNAL OF SOLID STATE CIRCUITS. VOL 28 NO 11, NOVEMBER 1993. The discharge current will always be larger than the leakage currents in the circuit of Figure 3(a). Accordingly, the circuit shown in 3(b) will always discharge before the temporary memory circuit and may therefore be used to indicate the validity of the temporary memory.

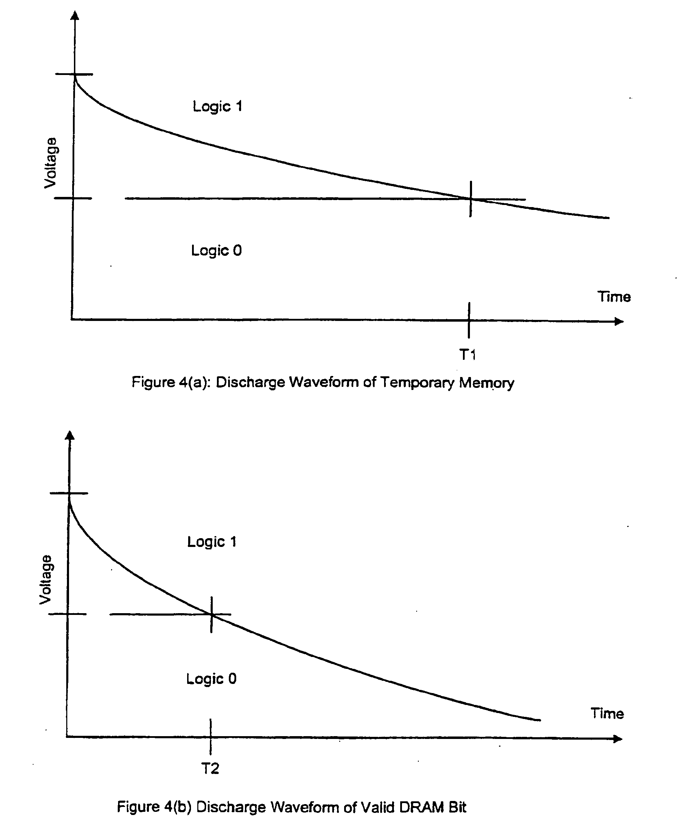

Figure 4(a) shows a representation of the discharge waveform for the temporary memory circuit. Figure 4(b) shows a representation of the discharge waveform for the Valid DRAM Bit circuit. It will be noted that the Valid DRAM Bit discharge to the transition point between a logical one and zero is significantly shorter than the temporary memory circuit because of the discharge circuit M1 and R.

Figure 5 shows a circuit for temporary memory fabricated on a silicon chip, whilst Figure 6 shows a circuit for a Valid DRAM Bit fabricated on a silicon chip

Figure 11 shows an alternative embodiment of the invention where use is made of temporary memory using RAM, where the electrical power for the memory 110 is stored on a storage capacitor 111. During a power outage the storage capacitor 111 is isolated from the main power supply by the series pass transistor 112. A discharge circuit 113 and voltage level detector 114 connected in parallel with the storage capacitor 111 is used to limit the maximum time that data remains stored in the memory. The discharge current is small enough to ensure that the memory contents remain valid during normal power outages. If the transponder remains without power for too long then the storage capacitor will discharge below the voltage threshold of the level detector. When power is reapplied the chip circuits will detect that the storage capacitor has discharged and recognise that the contents of the RAM are invalid.

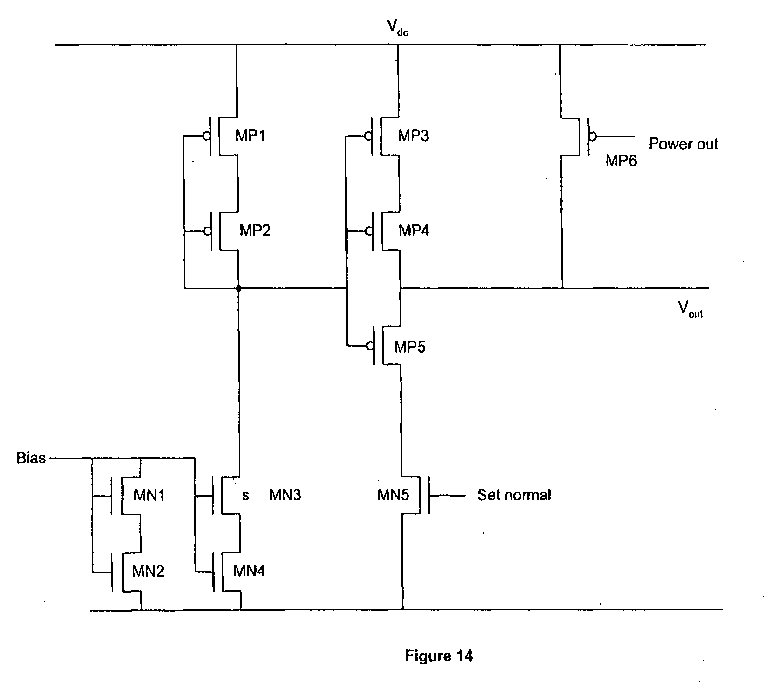

Figure 14 shows a RAM power supply isolation circuit fabricated on a silicon chip for an embodiment of the invention. This provides one specific example of the implementation of such circuitry and is intended to be indicative of the layout. It will be appreciated by those skilled in the art that other configurations and layouts are also suitable.

The methods used by the invention are applicable to a number of other aspects in a transponder system to provide advances over the prior art. Some of these aspects are further described below under that following headings.

### Mute Chip Bit

Where many transponders are simultaneously present inside a TRP the number of transponder identification messages may interfere with the identification process. It is advantageous to be able to silence transponder transmissions once the TRP has identified the transponder and completed all necessary dialogue with the transponder. The TRP may transmit a command, which mutes the transponder preventing further transmissions by the transponder. In the prior art systems the sequential and periodic switching of the interrogation field by the TRP results in transponders periodically powering down. Unfortunately, when they power down they lose this mute information. This necessitates that the muting information be repetitively transmitted for each new orthogonal direction. This reduces the time available for the TRP to receive transponder-identifying messages.

In yet another preferred embodiment of the invention the muting information is stored in the temporary memory, in the form of a "Mute Chip Bit". It is particularly advantageous to store this bit in temporary memory because the bit is not lost as the interrogation field is sequentially and periodically switched between the orthogonal directions. When a transponder powers up it can inspect the Mute Chip Bit and determine whether it should be mute.

### Configuration Settings

There are a number of transponder functional settings that provide enhanced system performance if they are chosen correctly. These settings can be advantageously stored in transponder temporary memory where they will be unaffected by the periodic power outages caused by the sequential switching of the interrogation field. Some examples of these are provided below to show the utility of using temporary memory.

PRBS Number: Transponders may use a random number for controlling some functions. For example transponders may uses a random time delay between reply transmissions where a random number controls the length of the delay. Alternatively transponders may randomly select a frequency for transmitting a reply where a random number controls the frequency selected. An example of such a system is US Patent No. 5,302,954. Random numbers are conveniently generated on chips by Pseudo Random Binary Sequence PRBS generators. These are made using long shift registers with feedback at critical points. For correct operation the binary number in the shift register must not be lost during the power outages caused by the sequential switching of the interrogation field. This is achieved if the shift register contents are stored in temporary memory, using a preferred embodiment of the present invention.

Chopper Settings: For applications where there are a large number of transponders present, the number of transponder identification messages may choke the communication system. Under these circumstances the proportion of transponders transmitting must be reduced. One method of achieving this is to introduce a random time delay between reply transmissions where a random number controls the length of the delay and the average length of the delay is set by the TRP. In this manner only a small portion of transponders are transmitting at any one time. The larger the average delay the smaller the proportion of transponders transmitting. The TRP can set the average delay length by writing to control bits. These bits represent the "Chopper Setting". It is advantageous if the Chopper Setting is not lost during the periodic power outages caused by the sequential switching of the interrogation field. This is achieved if the Chopper Setting is stored in temporary memory, using a preferred embodiment of the present invention.

Power Mode Control: For applications where there are a large number of transponders present and in close proximity, coupling between proximate operating transponders may impair transponder operation. Under these circumstances the proportion of transponders operating must be reduced so that the average distance between operating transponders is increased. The coupling between operating transponders is accordingly reduced. One method of achieving this is to introduce a random time delay between transponders moving from a low power non-operating state and a normal power operating state where a random number controls the length of the time and the average length of the time is set by the TRP. In this manner only a small portion of transponders are operating at any one time. The larger the average time the smaller the proportion of operating transponders. The TRP can set the average time by writing to control bits. These bits represent the "Power Mode Control" number. It is advantageous if the Power Mode Control is not lost during the periodic power outages caused by the sequential switching of the interrogation field. This is achieved if the Power Mode Control is stored in temporary memory, again, using a preferred embodiment of the invention.

The above description illustrates that the preferred embodiments of the invention provide many advantages over the prior art systems. In some embodiments these advantages arise from the provision of a plurality of RFID transponders for use with an RFID interrogator that provides a plurality of temporally spaced interrogating signals that include respective identifiers, where the transponders each include:
a receiver for receiving one or more of the interrogating signals;
a signal processor being responsive to the receiver for extracting the identifiers from the one or more signals; and
a transmitter being responsive to the identifiers for transmitting a response signal for allowing the interrogator to determine the order in which the transponders were first in receipt of an interrogating signal.

It is inherent in the transponder/TRP system that both the transponder and the TRP have transmitters and receivers for allowing two way communication between the devices. However, the preferred embodiments of this invention go further and utilise the content and timing of the transmitted information between the devices in an advantageous and constructive manner. The preferred embodiments also make use of the on-board processing capability of the transponders, which includes, amongst other components, the signal processor mentioned above, a central processor and associated memory.

Although the invention has been described with reference to a number of specific embodiments and aspects, it will be appreciated that by those skilled in the an that the invention can be embodied in many other forms.

## Claims

1. A radio-frequency identification transponder for use in an RFID system, the transponder including:
a dynamic memory array (802) for storing data; and
a power supply (801) for powering circuitry associated with the RFID transponder, including the dynamic memory array; **characterized in that**
the transponder is configured such that, when power ceases to be provided to the dynamic memory array by the power supply, the data in the dynamic memory array is validly maintained therein for a predetermined time period; and
wherein the memory array is responsive to an interrogating signal when powered from the system during the predetermined time period for selectively updating the data.

2. A transponder according to claim 1 wherein the RFID system provides an interrogating signal having an identifier and the transponder includes a receiver for receiving the signal.

3. A transponder according to claim 2 including a signal processor that is responsive to:
a) the receiver for extracting the identifier from the signal; and to
b) the identifier and the data for determining whether the identifier is stored in the memory array.

4. A transponder according to claim 1 wherein the power supply is configured to provide power by converting an externally applied electromagnetic excitation field into electrical power.

5. A transponder according to claim 1 wherein the predetermined time period is determined by discharging of the dynamic memory array through stray leakage paths within the dynamic memory array.

6. A transponder according to claim 1 and including timer means for providing a validity flag in response to an interrogating signal, the flag being "valid" if the interrogating signal is received within a second time period and "invalid" if the interrogating signal is received after the second time period, the transponder being configured such that the data in the dynamic memory array is maintained in a readable state until at least the expiration of the second time period.

7. A transponder according to claim 6 wherein the timer means includes a capacitive cell for storing a charge generated by current from the power supply, the timer means being configured such that, once power from the power supply ceases to be supplied, the charge in the capacitive cell discharges at a predetermined rate.

8. A transponder according to claim 6 wherein the status of the validity flag is based on a voltage generated at a predetermined point in the timer means, the voltage decaying as the capacitive cell discharges.

9. A transponder according to claim 6 wherein the voltage is the output voltage of the capacitive cell as it discharges through a load.

10. A transponder according to claim 9 wherein the capacitive cell is a memory cell.

11. A transponder according to claim 10 wherein the memory cell forms part of the dynamic memory array.

12. An RFID system including a transponder according to claim 1 and a transponder interrogator for providing an interrogation field and reading data from the transponder.

13. A system according to claim 12 wherein the interrogator is configured to sequentially switch an orientation of the interrogation field, and a second time period is selected to exceed the time that the interrogation field is off during switching of its orientation.

14. A method of using a radio-frequency identification transponder in an RFID system, the method including the steps of:
storing data in a dynamic memory array included within the transponder; and
powering circuitry associated with the RFID transponder, including the dynamic memory array, with a power supply; **characterized by**
validly maintaining the data in the dynamic memory array for a predetermined time period after power ceases to be provided to the dynamic memory array by the power supply; and
the memory array being responsive to an interrogating signal when powered from the system during the predermined time period for selectively updating the data.

15. A method according to claim 14 including the additional step of the RFID system providing an interrogating signal having an identifier, wherein the transponder includes a receiver for receiving the signal.

16. A method according to claim 15 wherein the transponder includes a signal processor that is responsive to:
a) the receiver for extracting the identifier from the signal; and to
b) the identifier and the data for determining whether the identifier is stored in the memory array.

## Patentansprüche

1. Funkfrequenzidentifikationstransponder zur Verwendung in einem RFID-System, wobei der Transponder umfasst:
ein dynamisches Speicherfeld (802) zum Speichern von Daten und
eine Energieversorgung (801) zum Versorgen einer dem RFID-Transponder zugeordneten Schaltung einschließlich des dynamischen Speicherfelds mit Energie, **dadurch gekennzeichnet,**
**dass** der Transponder derart konfiguriert ist, dass dann, wenn die Energieversorgung zu dem dynamischen Speicherfeld durch die Energieversorgung endet, die Daten in dem dynamischen Speicherfeld für eine vorbestimmte Zeitdauer gültig in diesem erhalten bleiben, und
wobei das Speicherfeld auf ein Abfragesignal anspricht, wenn es während der vorbestimmten Zeitdauer von dem System mit Energie versorgt wird, um die Daten wahlweise zu aktualisieren.

2. Transponder nach Anspruch 1, in welchem das RFID-System ein Abfragesignal bereitstellt, welches eine Kennung aufweist, und wobei der Transponder einen Empfänger zum Empfangen des Signals umfasst.

3. Transponder nach Anspruch 2, welcher einen Signalprozessor umfasst, welcher anspricht auf:
a) den Empfänger zum Extrahieren der Kennung aus dem Signal und auf
b) die Kennung und die Daten, um zu bestimmen, ob die Kennung in dem Speicherfeld gespeichert ist.

4. Transponder nach Anspruch 1, in welchem die Energieversorgung derart konfiguriert ist, dass sie Energie durch Umwandeln eines von außen angelegten elektromagnetischen Anregungsfeldes in elektrische Energie bereitstellt.

5. Transponder nach Anspruch 1, in welchem die vorbestimmte Zeitdauer durch Entladen des dynamischen Speicherfeldes über Streuverlustwege innerhalb des dynamischen Speicherfeldes bestimmt ist.

6. Transponder nach Anspruch 1, welcher Zeitgebermittel zur Bereitstellung eines Gültigkeitsflags in Antwort auf ein Abfragesignal umfasst, wobei das Flag "gültig" ist, wenn das Abfragesignal innerhalb einer zweiten Zeitdauer empfangen wird, und "ungültig" ist, wenn das Abfragesignal nach der zweiten Zeitdauer empfangen wird, wobei der Transponder derart konfiguriert ist, dass die Daten in dem dynamischen Speicherfeld zumindest bis zum Ablauf der zweiten Zeitdauer in einem lesbaren Zustand beibehalten werden.

7. Transponder nach Anspruch 6, in welchem die Zeitgebermittel eine Kondensatorzelle zum Speichern einer durch Strom von der Energieversorgung erzeugten Ladung umfasst, wobei die Zeitgebermittel derart konfiguriert sind, dass sich die Ladung in der Kondensatorzelle mit einer vorbestimmten Rate entläd, sobald die Zuführung von Energie von der Energieversorgung ended.

8. Transponder nach Anspruch 6, in welchem der Status des Gültigkeitsflags auf einer Spannung basiert, welche zu einem vorbestimmten Punkt in dem Zeitgebermittel erzeugt wird, wobei die Spannung abnimmt, wenn sich die Kondensatorzelle entlädt.

9. Transponder nach Anspruch 6, in welchem die Spannung die Ausgangsspannung der Kondensatorzelle ist, wenn sich diese über eine Last entlädt.

10. Transponder nach Anspruch 9, in welchem die Kondensatorzelle eine Speicherzelle ist.

11. Transponder nach Anspruch 10, in welchem die Speicherzelle einen Teil des dynamischen Speicherfeldes bildet.

12. RFID-System, umfassend einen Transponder gemäß Anspruch 1 und eine Transponderabfrageeinrichtung zum Bereitstellen eines Abfragefeldes und zum Lesen von Daten von dem Transponder.

13. System nach Anspruch 12, in welchem die Abfrageeinrichtung derart konfiguriert ist, dass sie sequentiell eine Orientierung des Abfragefeldes umschaltet und eine zweite Zeitdauer so gewählt ist, dass sie die Zeit, in der das Abfragefeld aus ist, während dessen Orientierung umgeschaltet wird, überschreitet.

14. Verfahren zum Verwenden eines Funkfrequenzidentifikationstransponders in einem RFID-System, wobei das Verfahren die folgenden Schritte umfasst:
Speichern von Daten in einem dynamischen Speicherfeld, welches in dem Transponder enthalten ist, und
Versorgen einer dem RFID-Transponder zugeordneten Schaltung, einschließlich dem dynamischen Speicherfeld, mit Energie mittels einer Energieversorgung, **gekennzeichnet durch**
Beibehalten der Daten in gültigem Zustand in dem dynamischen Speicherfeld für eine vorbestimmte Zeitdauer, nachdem die Zuführung von Energie zu dem dynamischen Speicherfeld **durch** die Energieversorgung ended, und
wobei das Speicherfeld auf ein Abfragesignal anspricht, wenn es während der vorbestimmten Zeitdauer von dem System mit Energie versorgt wird, um die Daten wahlweise zu aktualisieren.

15. Verfahren nach Anspruch 14, welches den zusätzlichen Schritt umfasst, dass das RFID-System ein Abfragesignal bereitstellt, welches eine Kennung aufweist, wobei der Transponder einen Empfänger zum Empfangen des Signals enthält.

16. Verfahren nach Anspruch 15, in welchem der Transponder einen Signalprozessor enthält, welcher anspricht auf:
a) den Empfänger zum Extrahieren der Kennung aus dem Signal und auf
b) die Kennung und die Daten zum Bestimmen, ob die Kennung in dem Speicherfeld gespeichert ist.

## Revendications

1. Transpondeur d'identification par radiofréquence destiné à être utilisé dans un système RFID, le transpondeur incluant :
une matrice (802) de mémoires dynamiques pour stocker des données ; et
une alimentation (801) pour alimenter des circuits associés au transpondeur RFID, incluant la matrice de mémoires dynamiques ; **caractérisé en ce que**
le transpondeur est configuré de sorte que, lorsque l'énergie cesse d'être fournie par l'alimentation à la matrice de mémoires dynamiques, les données dans la matrice de mémoires dynamiques sont maintenues valides dans celle-ci pendant une période de temps prédéterminée : et
dans lequel la matrice de mémoires réagit à un signal d'interrogation lorsqu'elle est alimentée à partir du système pendant la période de temps prédéterminée pour mettre à jour de façon sélective les données.

2. Transpondeur selon la revendication 1 dans lequel le système RFID fournit un signal d'interrogation ayant un identificateur et le transpondeur inclut un récepteur destiné à recevoir le signal.

3. Transpondeur selon la revendication 2 incluant un processeur de signal qui réagit :
a) au récepteur pour extraire l'identificateur à partir du signal ; et
b) à l'identificateur et aux données pour déterminer si l'identificateur est stocké dans la matrice de mémoires.

4. Transpondeur selon la revendication 1 dans lequel l'alimentation est configurée pour fournir de l'énergie en convertissant en énergie électrique un champ d'excitation électromagnétique appliqué de l'extérieur.

5. Transpondeur selon la revendication 1 dans lequel la période de temps prédéterminée est déterminée par un déchargement de la matrice de mémoires dynamiques à travers des chemins de fuite vagabonds à l'intérieur de la matrice de mémoires dynamiques.

6. Transpondeur selon la revendication 1 et incluant un moyen temporisateur pour fournir un fanion de validité en réponse à un signal d'interrogation, le fanion étant "valide" si le signal d'interrogation est reçu à l'intérieur d'une deuxième période de temps et "invalide" si le signal d'interrogation est reçu après la deuxième période de temps, le transpondeur étant configuré de sorte que les données dans la matrice de mémoires dynamiques sont maintenues dans un état lisible jusqu'à au moins l'expiration de la deuxième période de temps.

7. Transpondeur selon la revendication 6 dans lequel le moyen temporisateur inclut une cellule capacitive destinée à stocker une charge produite par un courant en provenance de l'alimentation, le moyen temporisateur étant configuré de sorte que, une fois que l'énergie en provenance de l'alimentation cesse d'être fournie, la charge dans la cellule capacitive se décharge suivant un débit prédéterminé.

8. Transpondeur selon la revendication 6 dans lequel le statut du fanion de validité est basé sur une tension produite à un point prédéterminé dans le moyen temporisateur, la tension décroissant lorsque la cellule capacitive se décharge.

9. Transpondeur selon la revendication 6 dans lequel la tension est la tension de sortie de la cellule capacitive lorsqu'elle se décharge à travers une charge.

10. Transpondeur selon la revendication 9 dans lequel la cellule capacitive est une cellule de mémoire.

11. Transpondeur selon la revendication 10 dans lequel la cellule de mémoire fait partie de la matrice de mémoires dynamiques.

12. Système RFID incluant un transpondeur selon la revendication 1 ainsi qu'un interrogateur de transpondeur destiné à fournir un champ d'interrogation et lire des données à partir du transpondeur.

13. System selon la revendication 12 dans lequel l'interrogateur est configuré pour commuter de façon séquentielle une orientation du champ d'interrogation et une deuxième période de temps est sélectionnée pour dépasser le temps pendant lequel le champ d'interrogation est coupé pendant une commutation de son orientation.

14. Procédé d'utilisation d'un transpondeur d'identification radiofréquence dans un système RFID, le procédé comportant les étapes :
de stockage de données dans une matrice de mémoires dynamiques incluse à l'intérieur du transpondeur, et
d'alimentation d'un circuit associé au transpondeur RFID, incluant la matrice de mémoires dynamiques, avec une alimentation ; **caractérisé par**
un maintien de la validité des données dans la matrice de mémoires dynamiques pour une période de temps prédéterminée après que de l'énergie cesse d'être fournie par l'alimentation à la matrice de mémoires dynamiques ; et
la matrice de mémoires réagissant à un signal d'interrogation lorsqu'elle est alimentée à partir du système pendant la période de temps prédéterminée pour mettre à jour de façon sélective les données.

15. Procédé selon la revendication 14 incluant l'étape additionnelle où le système RFID fournit un signal d'interrogation ayant un identificateur, dans lequel le transpondeur inclut un récepteur destiné à recevoir le signal.

16. Procédé selon la revendication 15 dans lequel le transpondeur inclut un processeur de signal qui réagit :
a) au récepteur pour extraire l'identificateur à partir du signal ; et
b) à l'identificateur et aux données pour déterminer si l'identificateur est stocké dans la matrice de mémoires.
